(19) Europäisches Patentamt / European Patent Office / Office européen des brevets

(11) **EP 4 318 965 A1**

(12) **EUROPEAN PATENT APPLICATION**
published in accordance with Art. 153(4) EPC

(43) Date of publication:
**07.02.2024 Bulletin 2024/06**

(21) Application number: **21932698.0**

(22) Date of filing: **24.11.2021**

(51) International Patent Classification (IPC):
**H04B 7/0452** (2017.01)    **H04L 1/06** (2006.01)
**H04B 17/309** (2015.01)

(52) Cooperative Patent Classification (CPC):
**H04B 7/0452; H04B 7/0456; H04L 1/00;**
**H04L 1/06;** H04B 17/309

(86) International application number:
**PCT/CN2021/132835**

(87) International publication number:
**WO 2022/199090 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2021 CN 202110321252**

(71) Applicant: **ZTE Corporation**
**Shenzhen, Guangdong 518057 (CN)**

(72) Inventors:
• **XIAO, Huahua**
  **Shenzhen, Guangdong 518057 (CN)**
• **WU, Hao**
  **Shenzhen, Guangdong 518057 (CN)**
• **LU, Zhaohua**
  **Shenzhen, Guangdong 518057 (CN)**
• **LI, Lun**
  **Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **CHANNEL STATE INFORMATION TRANSMISSION METHOD AND APPARATUS, TERMINAL, BASE STATION, AND STORAGE MEDIUM**

(57)    A channel state information transmission method and apparatus, a terminal, a base station, and a storage medium. The method comprises: acquiring a channel state information parameter, and generating first channel state information and/or acquiring a network parameter set according to the channel state information parameter (110); generating second channel state information according to a neural network determined by the first channel state information and the network parameter set (120); and transmitting the second channel state information (130).

FIG. 1

## Description

## CROSS-REFERENCE TO RELATED APPLICATION

This application is filed on the basis of Chinese Patent Application 202110321252.4 filed on March 25, 2021, and claims priority to the Chinese patent application, the entire contents of which are incorporated herein by reference.

## TECHNICAL FIELD

The present disclosure relates to the field of wireless communication, and more particularly, to a channel state information transmission and apparatus, a terminal device, a base station and a storage medium.

## BACKGROUND

As one of the important means to improve the quality of wireless communication at present, the multi-antenna technology plays an important role in standards such as Long Term Evolution (LTE), Long Term Evolution-Advanced (LTE-A) and New Ratio Access Technology (NR). In order to make full use of the multi-antenna technology, it is often necessary for base stations or terminal devices to obtain accurate Channel State Information (CSI). However, in the existing technology, the CSI needs to be measured by a terminal device, and an inaccuracy occurs in the measurement result. In order to reduce the feedback overhead, the feedback accuracy of CSI will be further reduced, resulting in unsatisfactory quality of network communication realized by the multi-antenna technology. Currently, there is an urgent need for a technical scheme to improve the feedback accuracy of CSI.

## SUMMARY

The main objective of the embodiments of the present disclosure is to provide a CSI transmission method and apparatus, a terminal device, a base station, and a storage medium, to enhance the accuracy of CSI feedback in the multi-antenna technology and improve the quality of wireless communication.

An embodiment of the present disclosure provides a CSI transmission method. The method includes: acquiring a CSI parameter, and generating first CSI and/or acquiring a network parameter set according to the CSI parameter; generating second CSI according to the first CSI and the network parameter set; and, transmitting the second CSI.

An embodiment of the present disclosure provides another CSI transmission method. The method includes: configuring a CSI parameter, the CSI parameter being used by a terminal device to generate first CSI and/or used by the terminal device to acquire a network parameter set; receiving second CSI transmitted by the terminal device; and, generating third CSI according to the network parameter set and the second CSI.

An embodiment of the present disclosure provides a CSI transmission apparatus, which includes:

a CSI generation module, configured to acquire a CSI parameter and generate first CSI and/or a network parameter set according to the CSI parameter;

a CSI compression module, configured to generate second CSI according to the first CSI and the network parameter set; and

a CSI transmission module, configured to transmit the CSI.

An embodiment of the present disclosure provides a CSI transmission apparatus, which includes:

a parameter configuration module, configured to configure a CSI parameter, the CSI parameter being used by a terminal device to generate first CSI and/or used by the terminal device to acquire a network parameter set;

a CSI receiving module, configured to receive second CSI transmitted by the terminal device; and

a CSI decompression module, configured to generate third CSI according to the second CSI and the network parameter set.

An embodiment of the present disclosure provides a terminal device, which includes:

one or more processors;

a memory configured to store one or more programs;

the one or more programs, when executed by the one or more processors, cause the one or more processors to implement the CSI transmission method according to any one of the embodiments of the present disclosure.

An embodiment of the present disclosure further provides a base station, which includes:

one or more processors;

a memory configured to store one or more programs;

the one or more programs, when executed by the one or more processors, cause the one or more processors to implement the CSI transmission method according to any one of the embodiments of the present disclosure.

An embodiment of the present disclosure further provides a computer-readable storage medium having computer programs stored thereon that, when executed by a processor, implement the CSI transmission method according to any one of the embodiments of the present disclosure.

## BRIEF DESCRIPTION OF DRAWINGS

FIG. 1 is a flowchart of a CSI transmission method according to an embodiment of the present disclosure;

FIG. 2 is a flowchart of another CSI transmission method according to an embodiment of the present disclosure;

FIG. 3 is a flowchart of another CSI transmission method according to an embodiment of the present disclosure;

FIG. 4 is a flowchart of another CSI transmission method according to an embodiment of the present disclosure;

FIG. 5 is a schematic structural diagram of a CSI transmission apparatus according to an embodiment of the present disclosure;

FIG. 6 is a schematic structural diagram of another CSI transmission apparatus according to an embodiment of the present disclosure;

FIG. 7 is a schematic structural diagram of a terminal device according to an embodiment of the present disclosure; and

FIG. 8 is a schematic structural diagram of a base station according to an embodiment of the present disclosure.

## DETAILED DESCRIPTION

It should be understood that the embodiments described herein are merely used for illustrating the present disclosure, and are not intended to limit the present disclosure.

In the following description, suffixes such as "module", "component" or "unit" used for denoting elements are only used to facilitate the description of the present disclosure and have no particular meaning in and of themselves. Therefore, the "module", "component" or "unit" may be used interchangeably.

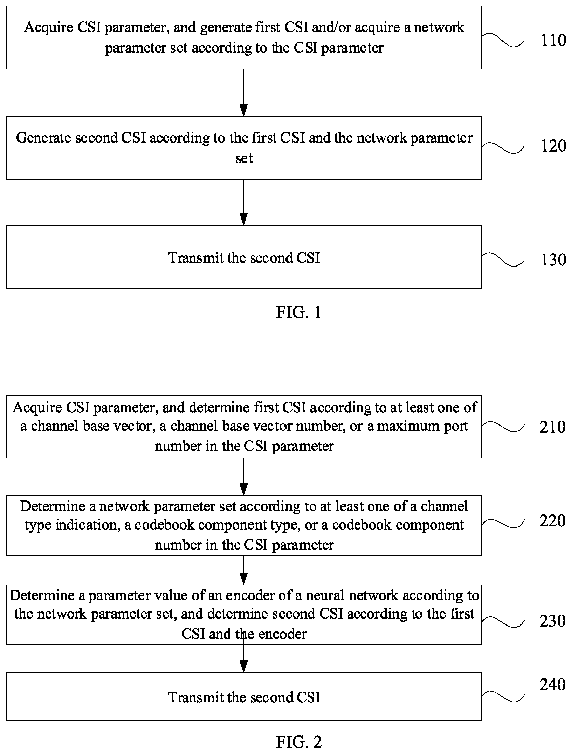

FIG. 1 is a flowchart of a CSI transmission method according to an embodiment of the present disclosure. The implementations of the present disclosure may be suitable for improving the quality of wireless communication. This method may be executed by the CSI transmission apparatus provided in the embodiments of the present disclosure, and this apparatus may be implemented by software and/or hardware and may be generally integrated in a terminal device. Referring to FIG. 1, the method provided in the embodiments of the present disclosure includes the following steps.

At a step 110, a CSI parameter is acquired, and first CSI is generated and/or a network parameter set is acquired according to the CSI parameter.

The CSI parameter may be a parameter that controls the generation of CSI, and the CSI may be information used to estimate channel characteristics of communication links. The CSI parameter may be indicated by a high-layer and/or physical layer signalling or generated by base station configuration. The CSI may include a codebook generated by artificial intelligence or a codebook generated by non-artificial intelligence, and the first CSI is a codebook or pre-coding (which may also be a weight, a pre-coding vector or a pre-coding matrix corresponding to the channel) that is determined according to the CSI parameter and to be input to a neural network corresponding to artificial intelligence.

In an embodiment, a CSI parameter may be acquired, and then first CSI is generated using the CSI parameter (a neural network parameter is obtained by default or by other signalling configurations); or, a network parameter set is acquired using the first CSI (that is, some parameters required for the neural network are acquired to construct a neural network according to the CSI configured by the base station), or first CSI is generated and a network parameter set is acquired according to the first CSI parameter.

At a step 120, second CSI is generated according to the first CSI and the network parameter set.

The second CSI is CSI generated after the first channel is processed by the neural network, which may be the first CSI compressed by the neural network.

In an embodiment, a CSI parameter may be acquired, and then first CSI is generated and/or a network parameter set is acquired using the CSI parameter, and second CSI is generated according to a neural network determined by the first CSI and the network parameter set, such that the accuracy of CSI is improved, and the problem of low accuracy caused by limited feedback overhead of CSI can be solved.

At a step 130, the second CSI is transmitted.

In the embodiment of the present disclosure, after the second CSI is determined according to the CSI parameter, the second CSI may be transmitted, such that a base station acquires CSI on the base station side according to the second CSI, thereby improving the quality of communication links.

In the embodiment of the present disclosure, the first CSI is generated and/or the network parameter set is acquired using the CSI parameter, and the second CSI is generated according to the neural network determined by the first CSI and the network parameter set, such that the accuracy of CSI is improved, and the problem of low accuracy caused by limited feedback overhead of CSI can be solved. Thus, the channel quality between the base station and the terminal device is improved, and the communication quality of the wireless communication network is enhanced.

Further, based on the above embodiment of the present disclosure, the CSI parameter includes at least one of:
a channel base vector, a channel base vector number, a maximum port number, a channel type indication, a codebook component type, a codebook component number, a bandwidth indication, or a frequency domain unit.

The channel base vector may be a base vector for transforming channels and may be used to represent channel characteristics between the base station and the terminal device; the channel base vector number may be the number of channel base vectors; the maximum port number may be the number of communication antennas or the maximum number of communication ports of the base station; the channel type indication may be information indicating the channel type (e.g., urban macro, urban micro, indoor, factory, office area, shopping mall, square, subway, etc.); the codebook component type may be information indicating the codebook type of the encoder, and the codebook type may include a parallel codebook component and a serial codebook component; the codebook component number may be the number of codebooks of the encoder; the bandwidth indication may information indicating a communication bandwidth (e.g., the number of sub-bands, the number of physical resource blocks and a bandwidth size); and the frequency domain unit may be a basic unit of frequency domain and may be information indicating a channel basis of frequency domain.

In the embodiment of the present disclosure, the CSI may be determined according to one or more of the acquired channel base vector, the channel base vector number, the maximum port number, the channel type indication, the codebook component type, the codebook component number, the bandwidth indication and the frequency domain unit.

FIG. 2 is a flowchart of another CSI transmission method according to an embodiment of the present disclosure. This embodiment of the present disclosure is a further elaboration of the above embodiment of the present disclosure. Referring to FIG. 2, the CSI transmission method provided in the embodiment of the present disclosure includes the following steps.

At a step 210, a CSI parameter is acquired, and first CSI is determined according to at least one of a channel base vector, a channel base vector number and a maximum port number in the CSI parameter.

The first CSI is a codebook or pre-coding (which may also be a weight, a pre-coding vector or a pre-coding matrix corresponding to the channel) that is determined according to the CSI parameter and to be input to a neural network corresponding to artificial intelligence, and the second CSI is CSI generated after the first channel is processed by the neural network.

In the embodiment of the present disclosure, first CSI may be generated according to one or more of the channel base vector, the channel base vector number and the maximum port number, and then second CSI is generated according to a neural network determined by the first CSI and the network parameter set, such that the accuracy of CSI is improved, the accuracy of transmitting or receiving signals is improved, and the quality of signal transmission is enhanced.

At a step 220, a network parameter set is determined according to at least one of a channel type indicator, a codebook component type, or a codebook component number in the CSI parameter.

The network parameter set may be a set of parameters for generating a neural network model. The neural network model determined based on the network parameter set can decrease the number of elements of the second CSI and can reduce the resource occupation by codebook transmission.

In the embodiment of the present disclosure, one or more network parameter sets may be preset, and each network parameter set may correspond to the values of the generated CSI. The CSI may be at least one of the channel type indication, the codebook component type, or the codebook component number. A network parameter set may be determined from multiple network parameter sets according to the value or indication type of the channel type indication.

At a step 230, a parameter value of an encoder of the neural network is determined according to the network parameter set, and second CSI is determined according to the first CSI and the encoder.

The second CSI may be pre-coded information determined based on the first CSI. The second CSI has less resource occupation compared with the first CSI, and the resource occupation by transmission can be reduced during the transmission of the second CSI.

In an embodiment, a neural network may be constructed using the network parameter set, and the value of the encoder in the neural network may be determined by the network parameter set. The first CSI may be compressed using the constructed encoder, to reduce the occupation of feedback resources by the pre-coded information. The first CSI may be input to the encoder of the constructed neural network and then compressed by the encoder, and an output result of the encoder may be used as the second CSI.

At a step 240, the second CSI is transmitted.

In the embodiment of the present disclosure, the first CSI is generated and/or the network parameter set is acquired using the acquired CSI parameter, and the second CSI is generated according to the neural network determined by the first CSI and the network parameter set; and, the second CSI is transmitted. The network parameter set is determined according to at least one of the channel base vector, the channel base vector number, or the maximum port number in the CSI parameter, and the second CSI is determined using the network parameter set and the first CSI. Thus, during the transmission of the second CSI, the occupation of feedback resources can be reduced, and the communication quality of wireless communication can be further improved.

Further, based on the above embodiment of the present disclosure, the network parameter set includes at least one of

a compression ratio, an activation function, a network layer number, a network layer mapping, a network layer weight, a network layer offset, or a network layer weight normalization coefficient.

The compression ratio may be a ratio of the number of elements of the second CSI to the number of elements of the first CSI. For example, the first codebook and the second codebook may be the first CSI and the second CSI, respectively. The network layer weight normalization coefficient may be a parameter that makes the value of the network layer weight located between [a, b], where a and b are real numbers. For example, the value may be [0, 1], [-1, 1], etc.

In the embodiment of the present disclosure, one or more network parameter sets may be preset, and the parameters in each network parameter set may be different. Each network parameter set may include one or more of the compression ratio, the activation function, the network layer number, the network layer mapping, the network layer weight, the network layer offset and the network layer weight normalization coefficient. Further, different network parameter sets may also have different parameter types.

Further, based on the above embodiment of the present disclosure, the method further includes:

determining a parameter value of an encoder of the neural network according to the network parameter set, and determining second CSI according to the first CSI and the encoder.

The normalization parameter may be a parameter that normalizes the coefficients of elements in the second CSI to [a, b], where a and b are real numbers. For example, the value may be [0, 1], [-1,1], etc.

In the embodiment of the present disclosure, a neural network may be constructed based on the network parameter set. The neural network is used to determine the second CSI and the normalization parameter of the second CSI. The first CSI may be used as input of the neural network model, and a normalization parameter output by this neural network model is acquired.

Further, based on the above embodiment of the present disclosure, the channel base vector number is determined by a number $N_F$ of frequency domain units.

In the embodiment of the present disclosure, the channel base vector number may be determined by the number of frequency domain units.

Further, based on the above embodiment of the present disclosure, determining the channel base vector number includes: determining the channel base vector number according to a frequency domain unit value set corresponding to the number $N_F$ of frequency domain units.

In the embodiment of the present disclosure, the values of the frequency domain units may be divided into K frequency domain unit value sets, and each frequency domain unit value corresponds to one channel base vector number.

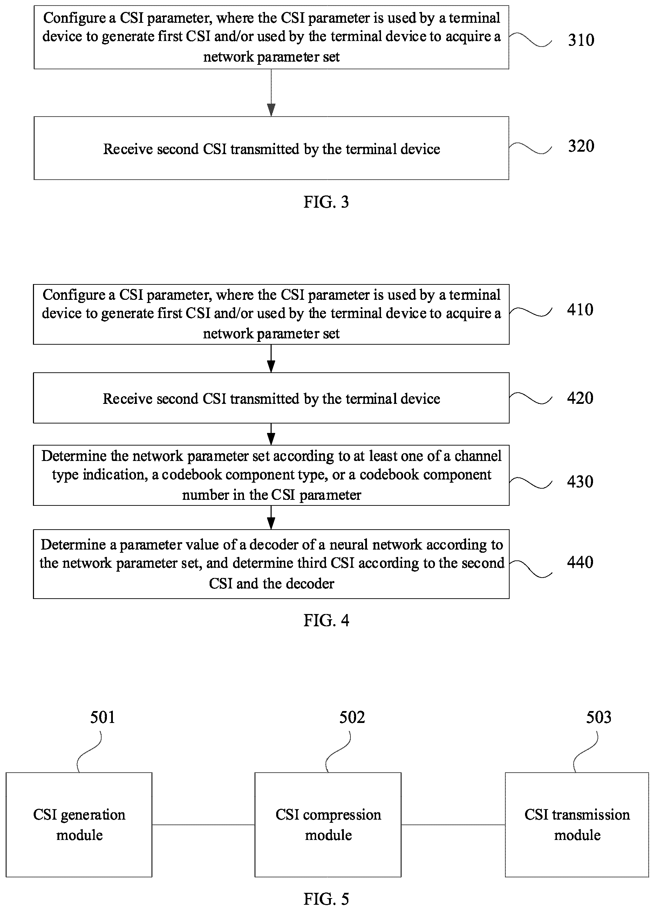

FIG. 3 is a flowchart of another CSI transmission method according to an embodiment of the present disclosure. The implementation of the present disclosure can be applied to improve the quality of wireless communication. The method may be executed by the CSI transmission apparatus in the embodiments of the present disclosure, and the apparatus may be implemented by software and/or hardware and may be generally integrated in a base station. Referring to FIG. 3, the method provided in the embodiment of the present disclosure includes the following steps.

At a step 310, a CSI parameter is configured, where the CSI parameter is used by a terminal device to generate first CSI and/or used by the terminal device to acquire a network parameter set.

In the embodiment of the present disclosure, a CSI parameter may be configured, and the CSI parameter may be used in a terminal device to generate CSI.

At a step 320, second CSI transmitted by the terminal device is received.

Second CSI transmitted by the terminal device may be received, where the second CSI may be generated by the terminal device according to the neural network determined by the first CSI and the network parameter set, and may be a compressed CSI.

In the embodiment of the present disclosure, by configuring the CSI parameter and receiving the second CSI transmitted by the terminal device, the accuracy of CSI transmission between the base station and the terminal device can be enhanced, the channel quality between the base station and the terminal device can be improved, and the communication quality of the wireless communication network can be enhanced.

Further, based on the above embodiment of the present disclosure, the CSI parameter includes at least one of:

a channel base vector, a channel base vector number, a maximum port number, a channel type indication, a codebook component type, a codebook component number, a bandwidth indication, or a frequency domain unit.

In an exemplary implementation, the CSI transmission method may include the following steps.

At a step 311, a CSI parameter is configured, where the CSI parameter is used by a terminal device to generate first CSI and/or used by the terminal device to acquire a network parameter set.

At a step 312, second CSI transmitted by the terminal device is received.

At a step 313, third CSI is generated according to the network parameter set and the second CSI.

The third CSI may be generated by decompressing the second CSI, and the third CSI can reflect channel characteristics more accurately.

In the embodiment of the present disclosure, a neural network may be constructed using the network parameter set, and the neural network may decompress the compressed CSI. The acquired second CSI may be input to the neural network for decompression, and an output result of the neural network may be used as the third CSI.

FIG. 4 is a flowchart of another CSI transmission method according to an embodiment of the present disclosure. This embodiment of the present disclosure is a further elaboration of the above embodiment of the present disclosure. Referring to FIG. 4, the method provided in the embodiment of the present disclosure includes the following steps.

At a step 410, a CSI parameter is configured, where the CSI parameter is used by a terminal device to generate first CSI and/or used by the terminal device to acquire a network parameter set.

At a step 420, second CSI transmitted by the terminal device is received.

At a step 430, a network parameter set is determined according to at least one of a channel type indicator, a codebook component type, or a codebook component number in the CSI parameter.

The network parameter set may be used to construct a neural network model, the neural network model can determine third CSI by utilizing the second CSI, and the third CSI may be an estimated value of the first CSI determined according to the CSI in the terminal device.

One or more network parameter sets may be preset in the base station, and each network parameter set may correspond to the values of the generated CSI parameter. The CSI parameter may be at least one of the channel type indication, the codebook component type, or the codebook component number. A network parameter set may be determined from multiple network parameter sets according to the value or indication type of the channel type indication.

Further, based on the above embodiment of the present disclosure, the network parameter set includes at least one of

a compression ratio, an activation function, a network layer number, a network layer mapping, a network layer weight, a network layer offset, or a network layer weight normalization coefficient.

At a step 440, a parameter value of a decoder of the neural network is determined according to the network parameter set, and the third CSI is determined according to the second CSI and the decoder.

The second CSI may be generated in the terminal device and then transmitted to the base station by the terminal device. The third CSI may be generated by decompressing the second CSI, and the third CSI may be the estimated value of the first CSI in the terminal device.

A neural network may be constructed according to the network parameter set, and the parameter value of the decoder in the neural network may be determined by the network parameter set. The second CSI may be decompressed using the constructed decoder. The second CSI may be input into the decoder, and an output result of the decoder may be used as the third CSI. The third CSI may be the estimated value of the first CSI determined according to the CSI in the terminal device.

In the embodiment of the present disclosure, a CSI parameter is configured, and the CSI parameter is used by the terminal device to generate first CSI and/or a network parameter set; second CSI transmitted by the terminal device is received; a network parameter set is determined according to the CSI parameter; and the third CSI is determined according to the second CSI and the network parameter set, and the third CSI is an estimated value of the first CSI, such that the accuracy of CSI can be improved and the problem of low accuracy caused by limited feedback overhead of CSI can be solved. Thus, the channel quality between the base station and the terminal device is improved, and the communication quality of the wireless communication network is enhanced.

Further, based on the above embodiment of the present disclosure, the method further includes: receiving a normalization parameter of the second CSI.

In the embodiment of the present disclosure, a normalization parameter of the second CSI transmitted by the terminal device may be received, and the normalization parameter may be determined by the terminal device.

Further, based on the above embodiment of the present disclosure, the channel base vector number is determined by a number $N_F$ of frequency domain units.

In the embodiment of the present disclosure, the channel base vector number may be determined by the number of frequency domain units.

Further, based on the above embodiment of the present disclosure, determining the channel base vector number includes:

dividing the values of the frequency domain units into K frequency domain unit value sets, where each frequency domain unit value set corresponds to one channel base vector number.

In the embodiment of the present disclosure, the values of the frequency domain units may be divided into K frequency domain unit value sets, and each frequency domain unit value corresponds to one channel base vector number.

Further, based on the above embodiment of the present disclosure, the method further includes: determining CSI according to the third CSI, the channel base vector, and the channel base vector number.

In an exemplary implementation, in a wireless communication system, the base station has $N_{tx}$ ports, and the terminal device has $N_{rx}$ ports, where the ports may be physical antennas or logical antennas. The maximum port number of the base station is $N_{max}$. There are N first transform base vectors $[f_1 ... f_N]$. When the channels are frequency domain channels, the first transform base vectors are frequency domain base vectors; and, when the channels are time domain channels, the first transform base vectors are time domain base vectors. Preferably, the first transform base vector $f_i$, $i = 1, \cdots, N$ is an $N_F*1$ Discrete Fourier Transform (DFT) vector, or a vector composed of multiple DFT vectors, for example:

$$f_i = u_n \otimes v_m \, , \quad \text{and} \quad f_i = \begin{bmatrix} u_n \otimes v_m \\ a \cdot u_k \otimes v_h \end{bmatrix},$$

where $u_n$, $v_m$ are N1*1 and N2*1 DFT vectors, and $N_F = N_1 * N_2$, which is a keroneck product.

Then, the first CSI (e.g., the pre-coding matrix) may be expressed as:

$$W = GF^T = \begin{bmatrix} g_1^{(1)} & \cdots & g_1^{(N)} \\ \vdots & \ddots & \vdots \\ g_{N_{tx}}^{(1)} & \cdots & g_{N_{tx}}^{(N)} \end{bmatrix} \begin{bmatrix} f_1^T \\ \vdots \\ f_N^T \end{bmatrix}.$$

In order to make the pre-coding matrix suitable for different antennas, zero may be padded in the matrix, for example,

$$W_M = G_M F^T = \begin{bmatrix} g_1^{(1)} & \cdots & g_1^{(N)} \\ \vdots & \ddots & \vdots \\ g_{N_{tx}}^{(1)} & \cdots & g_{N_{tx}}^{(N)} \\ 0 & \cdots & 0 \\ \vdots & \ddots & \vdots \\ 0 & \cdots & 0 \end{bmatrix} \begin{bmatrix} f_1^T \\ \vdots \\ f_N^T \end{bmatrix} = \begin{bmatrix} W \\ 0 \end{bmatrix}.$$

The above change may be that G is replaced with $G_M$, where $G_M$ is obtained by performing zero padding on G. For simplicity, both G and $G_M$ are called the first CSI (or first codebook) and denoted by a symbol G1. G1 is called the first codebook and is used as the input of the neural network, and the second CSI (or called the second codebook) is output by the neural network. The network parameter for machine learning (or artificial intelligence or neural network) includes, but not limited to, at least one of a compression ratio, an activation function, a network layer number, a network layer mapping, a network layer weight, a network layer offset, or a network layer weight normalization coefficient.

It is to be noted that, here, W may be a channel matrix H, for example, an estimated channel matrix $H_k$ from $N_{tx}$ ports to $N_{rx}$ ports of the terminal device by receiving downlink channel state information and referring to the channels obtained, where $H_k$ is a channel on a $k^{th}$ frequency domain granularity on one symbol and is a complex matrix of $N_{rx}*N_{tx}$, k=1,..., M, and M is a positive integer, for example, an integer multiple of 64 or an integer multiple of 5. The frequency domain granularity may be a sub-carrier, a Physical Resource Block (PRB), a Physical Resource Block Group (PRG) or a subband, where one subband includes at least one PRB, H is a combination of $H_k$, for example, a complex matrix belonging to $N_{rx}*N_{tx}*M$, or a fixed $i^{th}$ value by averaging and maximizing dimensions of the receiving antenna, where i is a value greater than 1 and less than M, and H is a complex matrix of $N_{tx}*M$.

It is to be noted that the spatial dimension of the port is not limited to a first dimension and may be a second dimension. In this case, G is a complex matrix of $M*N_{tx}$.

Based on the above embodiment of the present disclosure, the first codebook may also be preprocessed, and the preprocessed first codebook may be used as the first codebook for use in the communication system. The way of preprocessing the first codebook may include at least one of the following three ways.

Preprocessing way 1: the first codebook G1 is normalized, and a real part and/or an imaginary part of each coefficient is normalized to [0, 1]. For example, each element of G1 is divided by an element with the largest absolute value of G1, and the normalization coefficient is the absolute value of the element with the largest absolute value.

Preprocessing way 2: the first codebook G1 is normalized, an absolute value of each element is obtained to obtain a new codebook G1', and each coefficient in the new matrix is normalized to [0, 1]. For example, each element of G1' is divided by the largest element of G1', and the normalization coefficient is the largest element.

Preprocessing way 3: the first codebook is divided into two matrices, i.e., matrix 1 and matrix 2, where the matrix 1 corresponds to the real part of each element of the first codebook G1 and the matrix 2 corresponds to the imaginary part of each element of the first codebook. The matrix 1 and the matrix 2 are preprocessed in way 1 or way 2 to obtain a new matrix 1 and a new matrix 2, and the new matrix 1 and matrix 2 are merged into a higher-dimension matrix as the first pre-coding matrix. For example, if the original pre-coding matrix G1 has a dimension of N1*N2, the new pre-coding matrix is a matrix with a dimension of 2*N1 * N2 or N1* N2*2.

Based on the above embodiment of the present disclosure, there is a correspondence between the first transform base vector number and the bandwidth size. It is assumed that, in the wireless communication system, the base station has $N_{tx}$ ports, and the terminal device has $N_{rx}$ ports, where the ports may be physical antennas or logical antennas. The maximum port number of the base station is $N_{max}$. There are N first transform base vectors $[f_1 ... f_N]$. The number N of first transform base vectors is related to the bandwidth configured by the system. For example, the system bandwidth is divided into L sets according to the frequency domain granularity, and each set corresponds to one value of N. Here, the frequency domain granularity may be a sub-carrier, a PRB, a subband or a pre-coding PRG. For example, the value of N corresponding to an $i^{th}$ frequency domain set is Si, where i=1,..., L. Here, S2 to SL are positive integers arranged in an ascending order. For example, the correspondence is shown in the following table:

| $N_F$ | N |
|---|---|
| Frequency domain set 1 | Not applicable |
| Frequency domain set 2 | S2 |
| Frequency domain set 3 | S3 |
| ...... | ...... |
| Frequency domain set L | SL |

A more specific example is given below:

| $N_F$ | N |
|---|---|
| <8 | Not applicable |
| 8-16 | 8 |
| 16-24 | 16 |
| 24-32 | 24 |
| 32-40 | 32 |

As another preferred embodiment, the application scenarios of the communication system are divided into multiple channel types, and each channel type corresponds to one value of N. For example, an indoor scenario corresponds to one value of N, an outdoor scenario corresponds to one value of N, an urban macro corresponds to one value of N, and an urban micro corresponds to one value of N. The set of the values is configured to the terminal device through a high-layer signalling. Each channel type indicates one value in the set of values of N.

Further, based on the above embodiment of the present disclosure, the process of determining a second codebook by utilizing the first codebook and the network parameter set and determining a third codebook by utilizing the second codebook based on the network parameter set may be as follows.

The first codebook outputs a second codebook through a neural network. The neural network may be an autoencoder. In the terminal device, this process may be performed by an encoder in the autoencoder. The encoder includes K network layers, where an $i^{th}$ layer includes $L_{e,i}$ nodes, including at least one network layer weight $W_{e,i}$, 0-1 network layer offset $b_{e,i}$ and an activation function $S_{e,i}$, where i=1,..., K. The $i^{th}$ layer may be a convolutional layer, a fully connected layer, or a pooling layer. They are network parameters of this encoder. On the base station side, there is a decoder corresponding to the encoder, and the decoder includes L layers, where an $i^{th}$ layer includes $L_{d,i}$ nodes, including at least one network layer weight $W_{d,i}$, 0-1 network layer offset $b_{d,i}$ and an activation function $S_{d,i}$, where i=1,..., K. The $i^{th}$ layer may be a convolutional layer, a fully connected layer, a pooling layer, or a residual network block composed of several convolutional layers. The terminal device inputs the first codebook into the encoder, and the encoder outputs a second codebook. The second codebook is transmitted to the base station. Preferably, the second codebook may be quantized, encoded, modulated and then transmitted to the base station. The base station receives the second codebook. Preferably, the second codebook may be dequantized, demodulated, decoded, and then input into the decoder. The decoder outputs a third codebook (or referred to as the third CSI). The third codebook may be an estimated value of the first codebook. The CSI W is restored according to the first transform base vector corresponding to the third codebook.

The number of elements corresponding to the first codebook and the number of elements corresponding to the second codebook are different, and the number of elements of the second codebook is generally less than the number of elements corresponding to the first codebook. A ratio of the number of elements of the second codebook to the number of elements of the first codebook is called a compression ratio. For example, if the first codebook has a total of 2048 elements and the second codebook has only 32 elements, the compression ratio is 32/2048=1/64, that is, the compression ratio is 1/64.

Further, based on the above embodiment of the present disclosure, the value of the network parameter set may be determined in the following way.

In order to obtain the second codebook from the first codebook and obtain the estimated value of the first codebook from the second codebook on the base station side, an autoencoder is required, which includes an encoder and a decoder. The network parameters of the autoencoder may be trained offline, or trained offline and online. The base station may configure network parameters of M encoders through a high-layer signalling and then transmit the network parameters of the M autoencoders to the terminal device through a high-layer signalling and/or physical layer signalling. The terminal device selects one autoencoder according to at least one factor such as a scene of the channel, an angle spread of the channel or the angle spread, and transmits the selected autoencoder to the base station through a physical layer signalling and/or high-layer signalling. The first codebook is encoded by the encoder of the selected autoencoder to obtain the second coderbook. The base station obtains the corresponding decoder through an autoencoder index fed back by the terminal device, and processes the received second codebook to obtain the third codebook. It is to be noted that, if M=1, it is unnecessary for the terminal device to feed back the autoencoder index.

Further, based on the above embodiment of the present disclosure, the compression ratio between the first codebook and the second codebook may be determined in an adaptive way. A determination process may be as follows.

The terminal device may select a compression ratio according to the quality of channel, and then compress the number of elements of the first codebook into the number of elements corresponding to the second codebook. However, a different compression ratio may correspond to a set of network parameters, which will increase the interaction overhead between the base station and the terminal device. In order to reduce the overhead, there are two methods, i.e., a serial codebook component and a parallel codebook component, which are called codebook component types. The serial codebook component means that K second codebooks are generated with different compression ratios, for example, $1>a_1>a_2>...>a_K>0$, e.g., K=4, i.e., 1/4, 1/16, 1/32, and 1/64. An $i^{th}$ second codebook generates an $(i+1)^{th}$ second codebook through a fully connected layer, where i=1,2,..., K-1. The parallel codebook component means that K second codebooks are generated with the smallest compression ratio, for example, $1>a_1>a_2>...>a_K>O$, e.g., K=4, i.e., 1/4, 1/16, 1/32, and 1/64. Then, K second codebook components are generated with a compression ratio of 1/64, where one or more second codebook components may be cascaded to form a second codebook with a larger compression ratio. For example, the second codebook with a compression ratio 1/32 may be cascaded by two second codebook components with a compression ratio of 1/64.

FIG. 5 is a schematic structural diagram of a CSI transmission apparatus according to an embodiment of the present disclosure. The apparatus may execute the CSI transmission method provided in any one of the embodiments of the present disclosure, specifically executing corresponding functional modules and beneficial effects of the method. The apparatus may be implemented by software and/or hardware, and includes a CSI generation module 501, a CSI compression module 502 and a CSI transmission module 503.

The CSI generation module 501 is configured to acquire a CSI parameter and generate first CSI and/or a network parameter set according to the CSI parameter.

The CSI compression module 502 is configured to generate second CSI according to the first CSI and the network parameter set.

The CSI transmission module 503 is configured to transmit the second CSI.

In the embodiment of the present disclosure, the CSI generation module generates first CSI and/or acquires a network parameter set according to the CSI parameter, the CSI compression module generates second CSI according to a neural network determined by the first CSI and the network parameter set, and the CSI transmission module transmits the second CSI, such that the accuracy of CSI is improved, and the problem of low accuracy caused by limited feedback overhead of CSI can be solved. Thus, the channel quality between the base station and the terminal device is improved, and the communication quality of the wireless communication network is enhanced.

Further, based on the above embodiment of the present disclosure, the CSI parameter includes at least one of:

a channel base vector, a channel base vector number, a maximum port number, a channel type indication, a codebook component type, a codebook component number, a bandwidth indication, or a frequency domain unit.

Further, based on the above embodiment of the present disclosure, the apparatus further includes:

an information determination module, configured to determine the first CSI according to at least one of the channel base vector, the channel base vector number, or the maximum port number in the CSI parameter.

Further, based on the above embodiment of the present disclosure, the network parameter set includes at least one of

a compression ratio, an activation function, a network layer number, a network layer mapping, a network layer weight, a network layer offset, or a network layer weight normalization coefficient.

Further, based on the above embodiment of the present disclosure, the apparatus further includes:

an information compression module, configured to determine a parameter value of an encoder of the neural network according to the network parameter set, and determine second CSI according to the first CSI and the encoder.

Further, based on the above embodiment of the present disclosure, the apparatus further includes:

a normalization parameter module, configured to determine a normalization parameter of the second CSI according to the first CSI and the network parameter set.

Further, based on the above embodiment of the present disclosure, the channel base vector number is determined by a number $N_F$ of frequency domain units.

Further, based on the above embodiment of the present disclosure, determining the channel base vector number in the apparatus includes:

determining the channel base vector number according to a frequency domain unit value set corresponding to the number $N_F$ of frequency domain units.

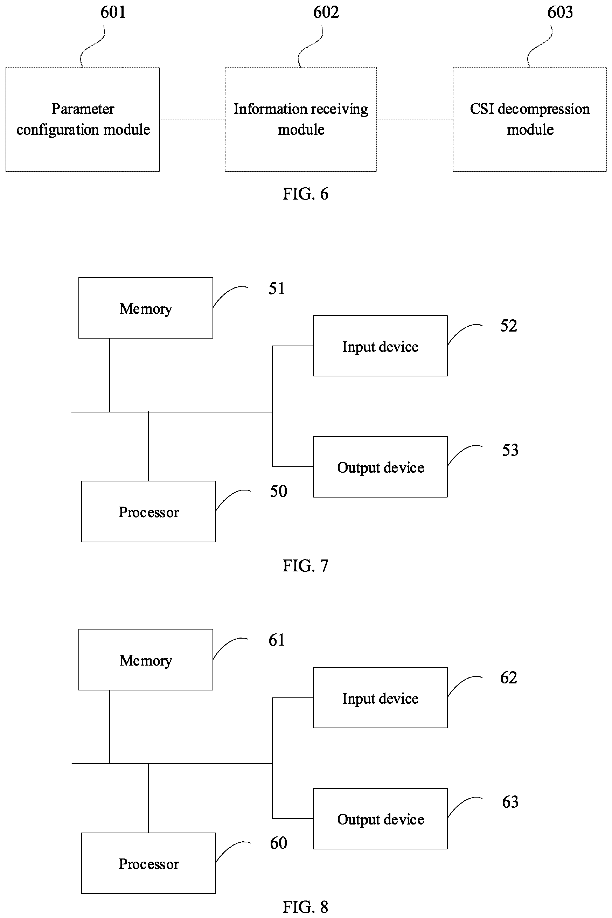

FIG. 6 is a schematic structural diagram of another CSI transmission apparatus according to an embodiment of the present disclosure. The apparatus may execute the CSI transmission method provided in any one of the embodiments of the present disclosure, specifically executing corresponding functional modules and beneficial effects of the method. The apparatus may be implemented by software and/or hardware, and includes a parameter configuration module 601, an information receiving module 602 and a CSI decompression module 603.

The parameter configuration module 601 is configured to configure a CSI parameter, the CSI parameter being used by a terminal device to generate first CSI and/or used by the terminal device to acquire a network parameter set.

The CSI receiving module 602 is configured to receive second CSI transmitted by the terminal device.

The CSI decompression module 603 is configured to generate third CSI according to the second CSI and the network parameter set.

In the embodiment of the present disclosure, the parameter configuration module configures a CSI parameter, the information receiving module receives second CSI transmitted by the terminal device, and the CSI decompression module constructs a neural network using the network parameter set and decompresses the second CSI using the neural network to generate the third CSI, such that the accuracy of CSI is improved and the problem of low accuracy caused by limited feedback overhead of CSI can be solved. Thus, the channel quality between the base station and the terminal device is improved, and the communication quality of the wireless communication network is enhanced.

Further, based on the above embodiment of the present disclosure, the CSI parameter includes at least one of:

a channel base vector, a channel base vector number, a maximum port number, a channel type indication, a codebook component type, a codebook component number, a bandwidth indication, or a frequency domain unit.

Further, based on the above embodiment of the present disclosure, the apparatus further includes:

a network parameter module, configured to acquire the network parameter set according to at least one of the channel type indication, the codebook component type, or the codebook component number in the CSI parameter, and determine a parameter value of a decoder according to the network parameter set.

Further, based on the above embodiment of the present disclosure, the network parameter set includes at least one of

a compression ratio, an activation function, a network layer number, a network layer mapping, a network layer weight, a network layer offset, or a network layer weight normalization coefficient.

Further, based on the above embodiment of the present disclosure, the CSI decompression module 603 includes:

an information restoration module, configured to determine the parameter value of the decoder of the neural network according to the network parameter set, and determine the third CSI according to the second CSI and the decoder.

Further, based on the above embodiment of the present disclosure, the apparatus further includes:
a normalization parameter receiving module, configured to receive a normalization parameter of the second CSI.

Further, based on the above embodiment of the present disclosure, the channel base vector number is determined by a number $N_F$ of frequency domain units.

Further, based on the above embodiment of the present disclosure, determining the channel base vector number in the apparatus includes: determining the channel base vector number according to a frequency domain unit value set corresponding to the number $N_F$ of frequency domain units.

Further, based on the above embodiment of the present disclosure, the apparatus further includes:
a channel information generation module, configured to determine CSI according to the third CSI, the channel base vector and the channel base vector number.

FIG. 7 is a schematic structural diagram of a terminal device according to an embodiment of the present disclosure. As shown in FIG. 7, the terminal device includes a processor 50, a memory 51, an input device 52 and an output device 53. There may be one or more processors 60 in the terminal device, and one processor 50 is taken as an example in FIG. 7. The processor 50, the memory 51, the input device 52 and the output device 53 in the terminal device may be connected via a bus or in other ways, and connection via the bus is taken as an example in FIG. 7.

As a computer-readable storage medium, the memory 51 may be configured to store soft programs, computer-executive programs and modules, such as the modules (the CSI generation module 501, the CSI compression module 502 and the CSI transmission module 503) corresponding to the CSI transmission apparatus in the embodiments of the present disclosure. The software programs, instructions and modules stored in the memory 51, when executed by the processor 50, cause the processor to implement various functional applications and data processing of the terminal device, i.e., implement the CSI transmission method described above.

The memory 51 may mainly include a program storage region and a data storage region. The program storage region may store application programs required by an operating system and at least one function, and the data storage region may store data created according to the use of the terminal device, etc. In addition, the memory 51 may include high-speed random access memories, or may include non-volatile memories, such as at least one magnetic disk memory device, flash memory devices or other non-volatile solid-state memory devices. In some instances, the memory 51 may further include memories remotely arranged relative to the processor 50, and these remote memories may be connected to the terminal device via a network. Examples of the network include, but not limited to, the Internet, an Intranet, a local area network, a mobile communication network and combinations thereof.

The input device 52 may be configured to receive input digit or character information and generate a key signal input related to user settings and function controls of the terminal device. The output device 53 may include a display screen or other display devices.

FIG. 8 is a schematic structural diagram of a base station according to an embodiment of the present disclosure. As shown in FIG. 8, the base station includes a processor 60, a memory 61, an input device 62 and an output device 63. There may be one or more processors 60 in the base station, and one processor 60 is taken as an example in FIG. 7. The processor 60, the memory 61, the input device 62 and the output device 53 in the base station may be connected via a bus or in other ways, and connection via the bus is taken as an example in FIG. 7.

As a computer-readable storage medium, the memory 61 may be configured to store soft programs, computer-executive programs and modules, such as the modules (the parameter configuration module 601, the information receiving module 602 and the CSI decompression module 603) corresponding to the CSI transmission apparatus in the embodiments of the present disclosure. The software programs, instructions and modules stored in the memory 61, when executed by the processor 60, cause the processor to implement various functional applications and data processing of the base station, i.e., implement the CSI transmission method described above.

The memory 61 may mainly include a program storage region and a data storage region. The program storage region may store application programs required by an operating system and at least one function, and the data storage region may store data created according to the use of the terminal device, etc. In addition, the memory 61 may include high-speed random access memories, or may include non-volatile memories, such as at least one magnetic disk memory device, flash memory devices or other non-volatile solid-state memory devices. In some instances, the memory 61 may further include memories remotely arranged relative to the processor 60, and these remote memories may be connected to the base station via a network. Examples of the network include, but not limited to, the Internet, an Intranet, a local area network, a mobile communication network and combinations thereof.

The input device 62 may be configured to receive input digit or character information and generate a key signal input related to user settings and function controls of the base station. The output device 63 may include a display screen or other display devices.

An embodiment of the present disclosure further provides a storage medium containing a computer-executable instruction which, when executed by a computer processor, causes the computer processor to implement a CSI transmission method. The method includes:

acquiring a CSI parameter, and generating first CSI and/or acquiring a network parameter set according to the CSI parameter;

generating second CSI according to a neural network determined by the first CSI and the network parameter set; and

transmitting the second CSI;
or,

configuring a CSI parameter, where the CSI parameter is used by a terminal device to generate first CSI and/or used by the terminal device to acquire a network parameter set;

receiving second CSI transmitted by the terminal device; and

generating the third CSI according to the network parameter set and the second CSI.

Certainly, in the storage medium containing computer-executable instructions provided in the embodiment of the present disclosure, the computer-executable instructions are not limited to the method operations described above, and may also execute related operations in the CSI transmission method provided in any one of the embodiments of the present disclosure.

In the embodiment of the present disclosure, first CSI is generated and/or a network parameter set is acquired using the CSI parameter, second CSI is generated according to the neural network determined by the first CSI and the network parameter set; and the second CSI is transmitted. Thus, accurate CSI is generated using the CSI parameter, the accuracy of acquiring CSI by the base station is improved, and the communication quality of the wireless communication network is enhanced.

From the above description of the implementations, it should be clearly understood by those having ordinary skills in the art that the present disclosure may be implemented by software and necessary general-purpose hardware. Of course, the present disclosure may also be implemented by hardware. However, in many cases, the former is preferred. Based on this understanding, the technical schemes of the present disclosure can be substantially embodied in the form of a software product, or a part of the present disclosure that contributes to the existing technology may be embodied in the form of a software product. The computer software product may be stored in a computer-readable storage medium, for example, a floppy disk, a Read-Only Memory (ROM), a Random Access Memories (RAM), a flash memory (FLASH), a hard disk, an optical disk or the like of a computer, and includes a plurality of instructions configured to cause a computer device (which may be a personal computer, a server, a network device, etc.) to execute the method described in the embodiments of the present disclosure.

It is to be noted that, in the embodiments of the search apparatus, the units and modules included are only divided according to a functional logic, but are not limited to the above division, as long as corresponding functions can be realized. In addition, the specific name of each functional unit is merely for the convenience of distinguishing from each other, and is not intended to limit the protection scope of the present disclosure.

It should be understood by those having ordinary skills in the art that, all or some of the steps in the methods disclosed above and the functional modules/units in the systems and devices disclosed above may be implemented as software, firmware, hardware and suitable combinations thereof.

In the hardware implementation, the division of the functional modules/units mentioned above does not necessarily correspond to the division of physical components. For example, one physical component may have a plurality of functions, or one function or step may be cooperatively executed by a number of physical components. Some or all of the physical components may be implemented as software executed by processors such as a central processor, a digital signal processor or a microprocessor, or implemented as hardware, or implemented as an integrated circuit such as an application-specific integrated circuit. Such software may be distributed on computer-readable mediums, and the computer-readable mediums may include a computer storage medium (or a non-temporary medium) and a communication medium (or a temporary medium). As is well known to those having ordinary skills in the art, the term "computer storage medium" includes volatile or non-volatile and removable or non-removable mediums implemented in any method or technology used to store information (such as computer-readable instructions, data structures, program modules or other data). The computer storage medium may include, but not limited to, an RAM, an ROM, an EEPROM, a flash memory and other memory technologies, a CD-RM, a Digital Versatile Disk (DVD) or other optical disk storages, magnetic cassettes, magnetic tapes, magnetic disk storages or other magnetic storage devices, or any other mediums that can be used to store desired information and can be accessed by computers. In addition, as is well known to those having ordinary skills in the art, the communication mediums generally contain computer-readable instructions, data structures, program modules or other data in modulated data signals such as carriers or other transmission mechanisms, and may include any information delivery medium.

Although the preferred embodiments of the present disclosure have been described above with reference to the accompanying drawings, the protection scope of the present disclosure is not limited thereto. Any modifications, equivalent replacements and improvements made by those having ordinary skills in the art without departing from the scope and essence of the present disclosure shall fall into the protection scope of the present disclosure.

**Claims**

1. A channel state information (CSI) transmission method, comprising:

   acquiring a CSI parameter, and generating first CSI and/or acquiring a network parameter set according to the CSI parameter;
   generating second CSI according to the first CSI and the network parameter set; and
   transmitting the second CSI.

2. The method of claim 1, wherein the CSI parameter comprises at least one of:
   a channel base vector, a channel base vector number, a maximum port number, a channel type indication, a codebook component type, a codebook component number, a bandwidth indication, or a frequency domain unit.

3. The method of claim 1, further comprising:
   determining the first CSI according to at least one of the channel base vector, the channel base vector number, or the maximum port number in the CSI parameter.

4. The method of claim 1, further comprising:
   determining the network parameter set according to at least one of the channel type indication, the codebook component type, or the codebook component number in the CSI parameter.

5. The method of claim 4, wherein the network parameter set comprises at least one of:
   a compression ratio, an activation function, a network layer number, a network layer mapping, a network layer weight, a network layer offset, or a network layer weight normalization coefficient.

6. The method of claim 1, wherein generating second CSI according to the first CSI and the network parameter set further comprises:
   determining a parameter value of an encoder of a neural network according to the network parameter set, and determining second CSI according to the first CSI and the encoder.

7. The method of claim 1, further comprising:
   determining a normalization parameter of the second CSI according to the first CSI and the network parameter set.

8. The method of claim 2, wherein the channel base vector number is determined by a number $N_F$ of frequency domain units.

9. The method of claim 8, wherein determining the channel base vector number comprises:
determining the channel base vector number according to a frequency domain unit value set corresponding to the number $N_F$ of frequency domain units.

10. A channel state information (CSI) transmission method, comprising:

configuring a CSI parameter, wherein the CSI parameter is used by a terminal device to generate first CSI and/or used by the terminal device to acquire a network parameter set;
receiving second CSI transmitted by the terminal device; and
generating third CSI according to the network parameter set and the second CSI.

11. The method of claim 10, wherein the CSI parameter comprises at least one of:
a channel base vector, a channel base vector number, a maximum port number, a channel type indication, a codebook component type, a codebook component number, a bandwidth indication, or a frequency domain unit.

12. The method of claim 10, further comprising:
acquiring the network parameter set according to at least one of the channel type indication, the codebook component type, or the codebook component number in the CSI parameter.

13. The method of claim 12, wherein the network parameter set comprises at least one of:
a compression ratio, an activation function, a network layer number, a network layer mapping, a network layer weight, a network layer offset, or a network layer weight normalization coefficient.

14. The method of claim 10, wherein generating third CSI according to the network parameter set and the second CSI further comprises:
determining a parameter value of a decoder of a neural network according to the network parameter set, and determining third CSI according to the second CSI and the decoder.

15. The method according to any one of claims 12 to 13, further comprising:
receiving a normalization parameter of the second CSI.

16. The method of claim 11, wherein the channel base vector number is determined by a number $N_F$ of frequency domain units.

17. The method of claim 16, wherein determining the channel base vector number comprises: determining the channel base vector number according to a frequency domain unit value set corresponding to the number $N_F$ of frequency domain units.

18. The method of claim 14, further comprising:
determining CSI according to the third CSI, the channel base vector and the channel base vector number.

19. A channel state information (CSI) transmission apparatus, comprising:

a CSI generation module, configured to acquire a CSI parameter and generate first CSI and/or a network parameter set according to the CSI parameter;
a CSI compression module, configured to generate second CSI according to the first CSI and the network parameter set; and
a CSI transmission module, configured to transmit the second CSI.

20. A channel state information (CSI) transmission apparatus, comprising:

a parameter configuration module, configured to configure a CSI parameter, wherein the CSI parameter is used by a terminal device to generate first CSI and/or used by the terminal device to acquire a network parameter set;
a CSI receiving module, configured to receive second CSI transmitted by the terminal device; and
a CSI decompression module, configured to generate third CSI according to the second CSI and the network parameter set.

21. A terminal device, comprising:

one or more processors; and
a memory configured to store one or more programs;
wherein the one or more programs, when executed by the one or more processors, cause the one or more processors to perform the CSI transmission method of any one of claims 1 to 9.

22. A base station, comprising:

one or more processors; and
a memory configured to store one or more programs;
wherein the one or more programs, when executed by the one or more processors, cause the one or more processors to perform the CSI transmission method of any one of claims 10 to 18.

23. A computer-readable storage medium, storing a computer program which, when executed by a processor, causes the processor to perform the CSI transmission method of any one of claims 1 to 18.

Acquire CSI parameter, and generate first CSI and/or acquire a network parameter set according to the CSI parameter — 110

Generate second CSI according to the first CSI and the network parameter set — 120

Transmit the second CSI — 130

FIG. 1

Acquire CSI parameter, and determine first CSI according to at least one of a channel base vector, a channel base vector number, or a maximum port number in the CSI parameter — 210

Determine a network parameter set according to at least one of a channel type indication, a codebook component type, or a codebook component number in the CSI parameter — 220

Determine a parameter value of an encoder of a neural network according to the network parameter set, and determine second CSI according to the first CSI and the encoder — 230

Transmit the second CSI — 240

FIG. 2

Configure a CSI parameter, where the CSI parameter is used by a terminal device to generate first CSI and/or used by the terminal device to acquire a network parameter set — 310

Receive second CSI transmitted by the terminal device — 320

FIG. 3

Configure a CSI parameter, where the CSI parameter is used by a terminal device to generate first CSI and/or used by the terminal device to acquire a network parameter set — 410

Receive second CSI transmitted by the terminal device — 420

Determine the network parameter set according to at least one of a channel type indication, a codebook component type, or a codebook component number in the CSI parameter — 430

Determine a parameter value of a decoder of a neural network according to the network parameter set, and determine third CSI according to the second CSI and the decoder — 440

FIG. 4

501

502

503

| CSI generation module | CSI compression module | CSI transmission module |

FIG. 5

601

602

603

| Parameter configuration module | Information receiving module | CSI decompression module |

FIG. 6

51 Memory

52 Input device

53 Output device

50 Processor

FIG. 7

61 Memory

62 Input device

63 Output device

60 Processor

FIG. 8

## INTERNATIONAL SEARCH REPORT

| | International application No. |
|---|---|
| | **PCT/CN2021/132835** |

**A. CLASSIFICATION OF SUBJECT MATTER**

H04B 7/0452(2017.01)i; H04L 1/06(2006.01)n; H04B 17/309(2015.01)n

According to International Patent Classification (IPC) or to both national classification and IPC

**B. FIELDS SEARCHED**

Minimum documentation searched (classification system followed by classification symbols)

H04B, H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, 3GPP, IEEE, IETF, NPL: 信道状态信息, 压缩, 编码, 编码, 神经网络, 人工智能, 机器学习, 深度学习, 激活函数, 权值, 偏置, 归一化, 多天线, 多入多出, 基矢量, CSI, compress, encode, code, neural, AI, machine learning, ML, deep learning, DL, activation function, weight, offset, bias, normalize, antenna, MIMO, vector

**C. DOCUMENTS CONSIDERED TO BE RELEVANT**

| Category* | Citation of document, with indication, where appropriate, of the relevant passages | Relevant to claim No. |
|---|---|---|
| X | CN 109672464 A (XIDIAN UNIVERSITY) 23 April 2019 (2019-04-23)<br>see description, paragraphs [0028]-[0050] | 1-23 |
| X | CN 108390706 A (SOUTHEAST UNIVERSITY) 10 August 2018 (2018-08-10)<br>see description, paragraphs [0005]-[0021] | 1-23 |
| X | CN 111555781 A (TIANJIN UNIVERSITY) 18 August 2020 (2020-08-18)<br>see description, paragraphs [0006]-[0040] | 1-23 |
| X | ZTE et al. ""Applications of Artificial Intelligence in MIMO networks""<br>*3GPP TSG RAN Meeting #89e, RP-201771*, 07 September 2020 (2020-09-07),<br>p. 8 | 1-23 |
| A | CN 110535513 A (ZTE CORP.) 03 December 2019 (2019-12-03)<br>see entire document | 1-23 |
| A | US 2020220593 A1 (INDUSTRIAL TECHNOLOGY RESEARCH INSTITUTE) 09 July 2020 (2020-07-09)<br>see entire document | 1-23 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 January 2022** | **09 February 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/132835**

| Patent document cited in search report | | | Publication date (day/month/year) | Patent family member(s) | | | Publication date (day/month/year) |
|---|---|---|---|---|---|---|---|
| CN | 109672464 | A | 23 April 2019 | None | | | |
| CN | 108390706 | A | 10 August 2018 | None | | | |
| CN | 111555781 | A | 18 August 2020 | None | | | |
| CN | 110535513 | A | 03 December 2019 | AU | 2019370538 | A1 | 20 May 2021 |
| | | | | US | 2021258058 | A1 | 19 August 2021 |
| | | | | KR | 20210083251 | A | 06 July 2021 |
| | | | | SG | 11202103259 T | A | 29 April 2021 |
| | | | | WO | 2020088640 | A1 | 07 May 2020 |
| | | | | EP | 3876433 | A1 | 08 September 2021 |
| | | | | EP | 3876433 | A4 | 22 December 2021 |
| US | 2020220593 | A1 | 09 July 2020 | TW | I687063 | B | 01 March 2020 |
| | | | | TW | 202027440 | A | 16 July 2020 |
| | | | | US | 10911113 | B2 | 02 February 2021 |

Form PCT/ISA/210 (patent family annex) (January 2015)

**EP 4 318 965 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110321252